# EUROPEAN PATENT APPLICATION

(11) **EP 1 880 894 A2**
(43) Date of publication of application: **23.01.2008**
(21) Application number: 07252831.8
(22) Date of filing: 17.07.2007
(51) Int. Cl.: B60N 2/44, B60N 2/68, B60N 2/70, B60R 22/32

(54) **Seat assembly with removable portions to accommodate occupant-worn equipment**

(30) Priority: 18.07.2006 US 831631 P
(71) Applicant: Global Seating Systems LLC, Exton, PA 19341 (US)
(72) Inventor: Hammarskjold, Christian U., Devon, PA 19333 (US); Butch, Frank J., West Chester, PA 19380 (US)
(74) Representative: Belcher, Simon James

(57) **Abstract**

A seat assembly for a vehicle comprises a seat back and a seat base. The seat back has a front side and a back and defines a pocket on the front side. A removable centre panel is positioned in the centre pocket, and a fastening assembly releasably secures the centre panel to the front side and can also releasably secure the centre panel to the back. Side bolsters are adapted to protect the kidney area and to provide lateral support of a seat occupant and are removably mounted on a mounting plate. The seat back can be formed as a generally curvo-planar member having a first curve radiused generally away from the seat base which defines a recess adapted to accommodate a B-beam or other structure of a vehicle, and a second curve radiused generally toward the seat base. The first curve is connected to the seat base and the second curve extends from the first curve.

## Description

This invention relates to a seat with removable portions, and more particularly to seats having removable portions to accommodate occupant-worn equipment.

Seats used in military, off-road and other heavy transportation vehicles have unique and specialized requirements. Occupants of such seats may encounter crashes, mine blasts or other dynamic events where it is important to secure the occupant to the seat and to have the occupant properly positioned in the seat. Known seat belt systems fail to hold the seated occupant in a desirable position during such dynamic events. In addition, such seats may need to accommodate unusual geometries beyond just a seat occupant, such as soldiers in the field who carry large amounts of equipment. The equipment can include, for example, backpacks (for example for carrying a quantity of drinking water or another liquid), canteens, radios, flack vests, night vision devices, grenades, flashlights, side arms, knives, ammunition, etc. Similarly, workers in some other applications, such as mining, are required to wear equipment around their waists or on their back. Wearing this required equipment changes the contour of the seated occupant. Conventional seating systems do not readily accommodate such unusual body profiles. The seated occupant with such equipment is forced to sit in an unsupported, non-ergonomic seating position and their equipment affects how seat belts lay across the body and how the occupant sits in the seat assembly. For example, use of a backpack or canteen by a seat occupant forces the occupant away from a seat backrest and forward of a position intended by seat designers. Such seat occupants may encounter crashes, mine blasts or other dynamic events where it is imperative that the seated occupant be properly positioned (i.e., where the seat occupant is supported by the seat assembly). Injury thresholds in such situations are significantly lower when a seated occupant is not properly positioned in the seat, in part because when sitting forward of the proper position, a seat occupant is more likely to strike a steering wheel, dashboard or other vehicle parts and in part because of the increased chance for lateral or side to side movement out of the seat. A properly positioned seated occupant is more likely to survive such dynamic events.

In addition, seated occupants of such vehicles may need to egress rapidly (such as, for example, a soldier in a battle) and cannot afford to have seat belts snag on their equipment. It would be desirable to provide a seat assembly which is modular, that is, a seat assembly which is readily reconfigurable for different seat occupants, where each new seat occupant may or may not be wearing the same equipment. It would also be desirable to provide a seat which allows for ready and quick egress and which accommodates irregular geometries.

Some vehicles have very limited space behind the seats. Specifically, some vehicles have a metal structural member (sometimes referred to as a "B-Beam") which lies immediately behind a seat assembly. The B-Beam limits how far back a seat can move because the seat backrest strikes against the B-Beam. This is a problem when it is desirable to be able to adjust the seat position further backwards to accommodate larger/taller occupants. It would be desirable to provide a seat which allows for increased adjustment around obstacles and bulky structural members.

In accordance with a first aspect, a seat assembly for a vehicle comprises a seat back and a seat base, wherein the seat back has a front side and a back and defines a pocket on the front side, a removable centre panel is positioned in the centre pocket, and a fastening assembly releasably secures the centre panel to the front side and may also releasably secure the centre panel to the back. Side bolsters are adapted to protect the kidney area and to provide lateral support of a seat occupant and are removably mounted on a mounting plate. In accordance with another aspect the seat back is preferably formed as a generally curvo-planar member having a first curve radiused generally away from the seat base which defines a recess adapted to accommodate a B-beam of a vehicle, and a second curve radiused generally toward the seat base. The first curve is connected to the seat base and the second curve extends from the first curve.

The seat assembly of the invention has particular advantages when used in applications which include military, off-road and other heavy transportation vehicles.

Embodiments of the invention will now be described by way of example with reference to the accompanying drawings, in which:
Fig. 1 is a perspective view of a seat assembly in accordance with a preferred embodiment, showing a seat assembly with a locked seat belt assembly.
Fig. 2 is a perspective view of the seat assembly of Fig. 1 with bolsters and arms removed.
Fig. 3 is a perspective view of the seat assembly with the bolsters attached but the arms and centre panel removed.
Fig. 4 is a back view of the seat assembly showing the centre panel secured to the back of the seat back.
Fig. 5 shows the seat assembly with the seat cushions removed, revealing a cable assembly connected between the seat belts and a single point seat belt release.
Fig. 6 shows the seat assembly of Fig. 5 with the seat belts unlocked.
Fig. 7 is an exploded perspective view of a preferred embodiment of the latch assembly.
Fig. 8 is a front side view of the latch assembly with a handle pivoted about 110° from a resting position.
Fig. 9 is a side view of the latch assembly with the handle at the resting position and with a pivot bracket yet to pivot.
Fig. 10 is a side view of the latch assembly with the handle pivoted about 80° from the resting position and with a pivot bracket yet to pivot.
Fig. 11 is a side view of the latch assembly with the handle pivoted about 100° from the resting position and the pivot bracket pivoted about 20°, urging cables to move to unlatch the seat belt assembly.
Fig. 12 is an alternative preferred embodiment of a seat assembly shown to accommodate irregular environments.
Fig. 13 is a side view of the seat assembly of Fig. 12.

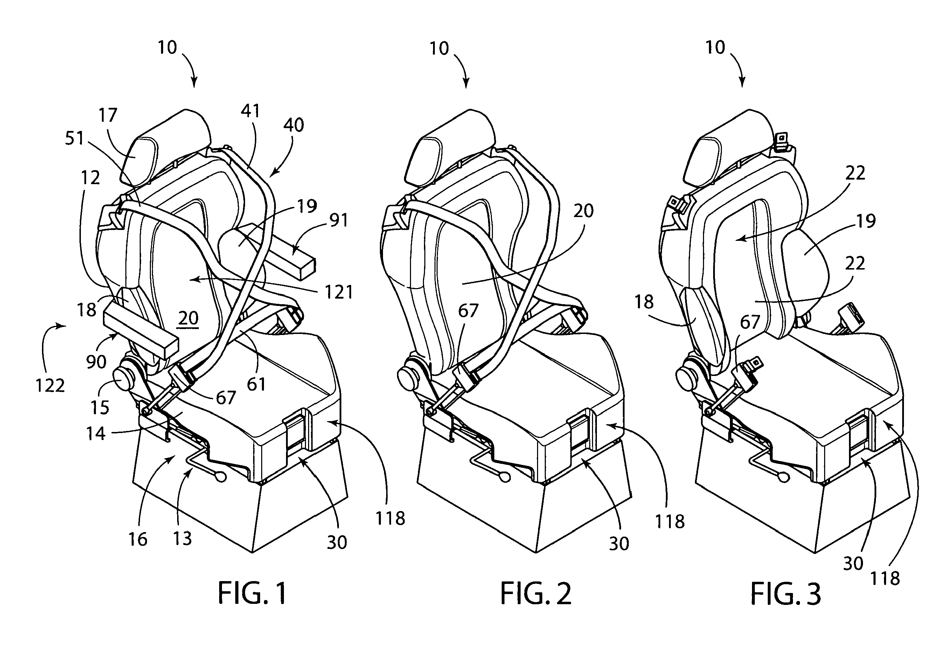

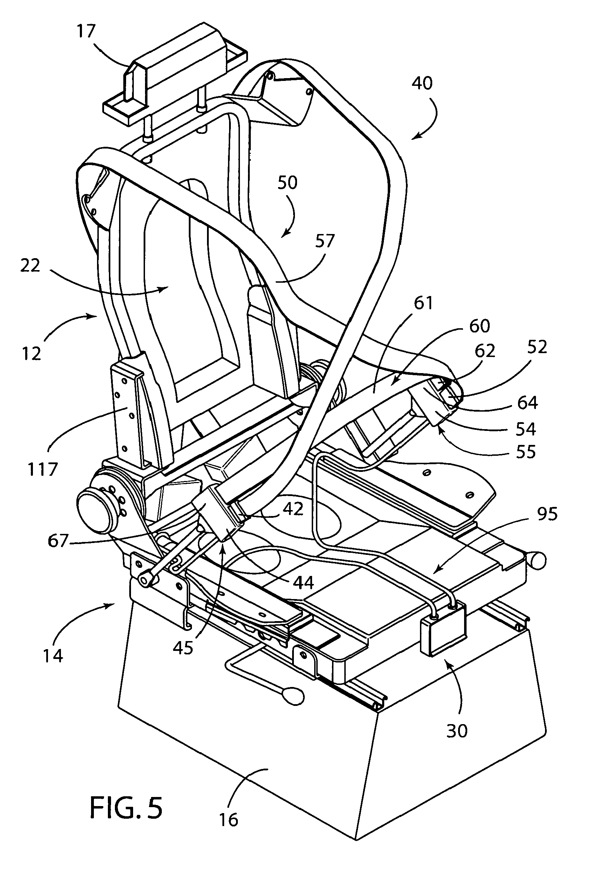

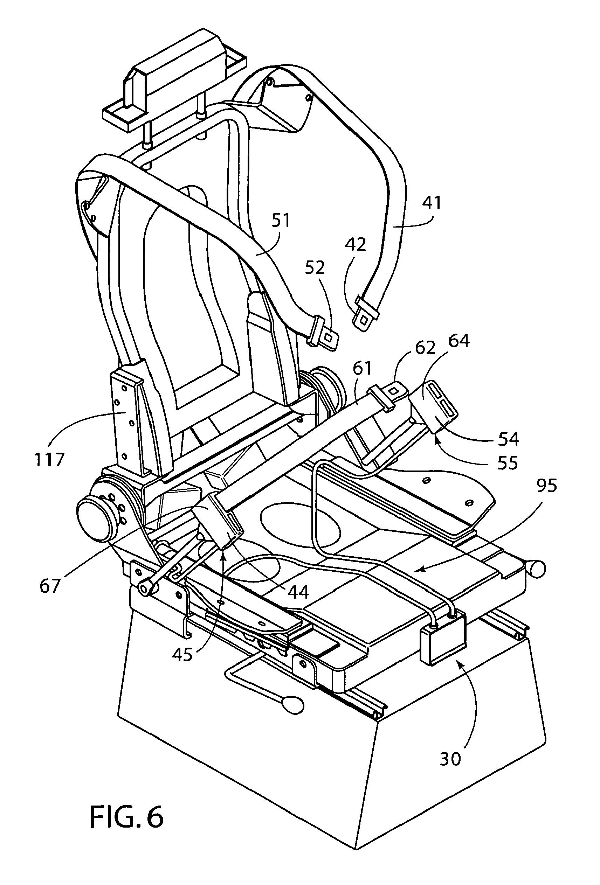

Referring now to the drawings, Fig. 1 shows a seat assembly 10 in accordance with a preferred embodiment for use in military vehicles and the like. The seat assembly has a seat back 12, a seat base 14, and optionally a seat pivot 15 permitting the seat back to pivot with respect to the seat base. Both the seat back and seat base preferably comprise both a structural frame covered by foam and fabric. The seat base 14 is preferably mounted on a seat stand 16 which is in turn attached to the vehicle. The seat base may be adjustable with respect to the seat stand with a seat slide adjuster assembly 13. The seat assembly may also be provided with a head rest 17, arms 90, 91 and bolsters 18, 19. Bolsters are shown in Figs. 1, 3 and 4 as cushioning projections extending generally away from the seat back 12 and towards the front side 121 of the seat back, and above the seat base 14 so as to protect the kidney area of a seat occupant properly positioned in the seat. That is, the area above a meeting line between the seat back and seat base as shown in the Figs. In accordance with a highly advantageous feature, both the arms 90, 91 and bolsters 18, 19 may be bolt-on and removable. The lower side bolsters provide additional side to side support and protection of an occupant, and help keep the occupant contained. By having the ability to bolt on lower side bolsters, fleets of seating assemblies may be standardized on one seat that is readily adaptable to both combat operations and combat support roles, as well as to other situations. It is preferable to have a seat assembly with adequate side bolstering positioned lower on the seat back generally adjacent a seat occupant's kidney/hip area, such as at mounting bracket 117 shown in Figs. 5 and 6. Removal of the bolsters helps accommodate canteens, sidearms and other equipment positioned near the waist of a seat occupant.

Soldiers in combat operations are required to wear very specific equipment including, but not limited to canteens or other containers for liquids (which might be carried in a backpack), radios, flack vests, ammunition, radios, etc. Soldiers in combat support roles often do not have to wear the same equipment. As such they do not need the sculpted backrest to accommodate their seating posture. A removable centre panel 20 is provided on a front side 121 of the seat back 12. As shown in Fig. 1, when installed the centre panel 20 is surrounded by foam and fabric on both left and right sides and also by foam and fabric above a top of the centre panel. Preferably the centre panel extends down to and helps define part of the meeting line between the seat back and the seat base. The centre panel may advantageous be flipped over to the back 122 of the seat back and fastened again. Removal of the centre panel helps accommodate backpacks and other bulky and unusual equipment and helps position the seated occupant's H-point closer to where the seat's designers intended.

A seat belt assembly 40 comprises three seat belt devices; two shoulder belts 41, 51 and one lap belt 61, each provided with a corresponding latch 42, 52, 62 (seen in Fig. 6) which engages a corresponding buckle 44, 54, 64. The shoulder belts are shown to cross over one another, forming an "X" pattern. Preferably the seat belt assembly is formed as an "all-belts-to-seat" design, where the seat belts are anchored on the seat back and seat base, but not to the surrounding vehicle. This can make it easier to install the seat as a complete module during assembly. In accordance with an advantageous feature, each seat belt may be unbuckled individually or a single release mechanism 30 may be used to unbuckle all seats essentially simultaneously. The release mechanism may be mounted anywhere proximate the seat assembly, either on the seat assembly or nearby. As shown in the Figs., release mechanism 30 is mounted on a front side 118 of the seat base 14.

Fig. 2 shows seat assembly 10 with bolsters 18, 19 and arms 90, 91 removed. Preferably for the combat support roles, the removable centre panel 20 would remain in place. This allows persons with the above mentioned equipment to be ergonomically placed in a seat where otherwise they would be forced forward of the natural seating position and placed in an unsuitable or partially supported seating position. Fig. 3 shows the centre panel removed leaving pocket or opening 22. The seat belts 41, 51, 61 are also removed for clarity of illustration.

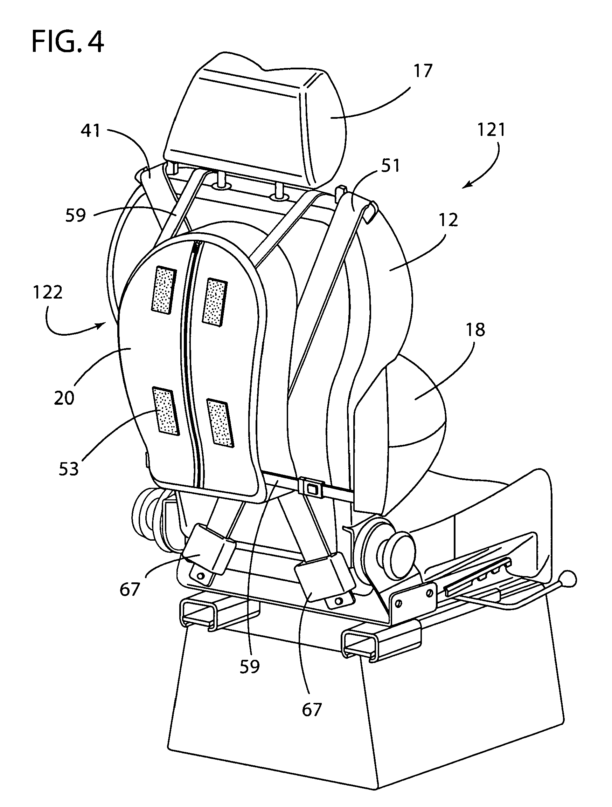

Fig. 4 shows the seat from the back side 122 with the removable centre panel 20 removed from the front side 121 and attached to the seat back 12. The centre panel 20 can be removed to accommodate any gear worn on a user's back, such as a back pack (which might include a container for drinking water or another liquid). Ideally, the removable centre panel 20 is connected to the seat back 12 by a fastening assembly which can comprise, for example, straps 59 mounted on the seat back 12. These straps allow the removable centre panel to be flipped over the back side 122 of the seat back and secured in place helping to keep the centre panel from being lost. The fastening assembly can further comprise strips 53 of the hook part of a hook and loop fastener (such as that sold under the trade mark Velcro) affixed to the centre panel 20 which releasably adhere to a receiving area such as a cloth or fabric on the surface of the seat back in the pocket 22 and thereby releasably secure the centre panel to the front side 121 of the seat back. The hooks and loops provided by the strips 53 and the receiving area may be reversed. Alternative fastening assembly components can comprise clips, snaps or other mechanical fasteners, for example. Retractors 67 are shown which each separately retract a corresponding seat belt 41, 51 to a retracted position. Each retractor is a spring loaded device which pulls a corresponding belt to wrap away from the corresponding buckle, advantageously removing the seat belt as an obstacle for egress and ingress to and from the seat assembly.

Optionally, the seat back and seat base may be adapted to mount armour plating, either in sheet form or in contoured mould, bolted onto the seat backrest and bottom, for example. During crashes, mine blasts, or other dynamic events, it is very important to securely couple a seated occupant to the seat assembly. Reducing dynamic amplification is strongly correlated with increased occupant survivability and injury reduction. To help protect seat occupants a multi-point seat belt restraint system or assembly 40 is provided mounted to a rigid seat assembly. The shoulder belts 41, 51 cross over the occupant's chest and are latched to corresponding seat belt buckles 44, 54, respectively, near the occupant's hip point, thereby forming an "X" across the chest. More specifically, a latch housing 45 receives a retractor 67 for belt 61 and buckle 44 for latch 42. Latch housing 55 accommodates both buckle 54 for latch 52 and buckle 64 for latch 62. Within the latch housings 45, 55 the buckles releasably engage the corresponding latches. The retractor 67 contains the lap belt 61 in a rolled up state or retracted position when the belt 61 is disengaged from latch member 54 and released by an occupant. Preferably as shown in the Figs. each seat belt is provided with its own retractor 67. Advantageously, all seat belts are independently retracted by each corresponding retractor, thereby reducing the likelihood that the belts will snag on any equipment worn by a seat occupant.

Each seat belt is independent or discontinuous of the others in the sense that each may be individually disengaged, that is the belts (such as one of the shoulder belts and the lap belt) are not connected to one another. Providing seat belts in this manner is advantageous in that it helps distributes load and more securely holds a seated occupant to a seat in a crash, mine blast, or other dynamic event. Further, such an alignment of seat belts aids in the compartmentalization of the occupant in a side impact, mine blast or other dynamic event.

One problem with any multiple independent seat belt assembly is that the occupant must release multiple seat belts to get out of the seat. This extra effort increases egress time. For some situations, such as soldiers in combat theatres, quick egress time is crucial. In these environments, it is preferable to have a single point release mechanism which allows a seat occupant to disengage all seat belts essentially simultaneously. As shown in Figs. 5-6, the buckles 44, 54, 64 are linked together via a connecting assembly which is in turn connected to a release mechanism 30. As shown in the drawings, the connecting assembly is a cable assembly 95, but may also comprise, for example, electrical connectors, pneumatic connectors or other mechanical connectors, or a combination thereof, etc. Ideally, the single point release mechanism location is positioned remote from the latch housings such that it is easily reached by a seated occupant. Remote is understood here to mean that the release mechanism is not in direct contact with the latch housings which contain the buckles and corresponding latches when engaged to the buckles. One suitable remote location is the front of the seat cushion bottom assembly. A seat occupant can bend over to actuate the release mechanism. The release mechanism may also be mounted in a position where it is not attached to the seat. It is also desirable to avoid unintentional actuation of the release mechanism.

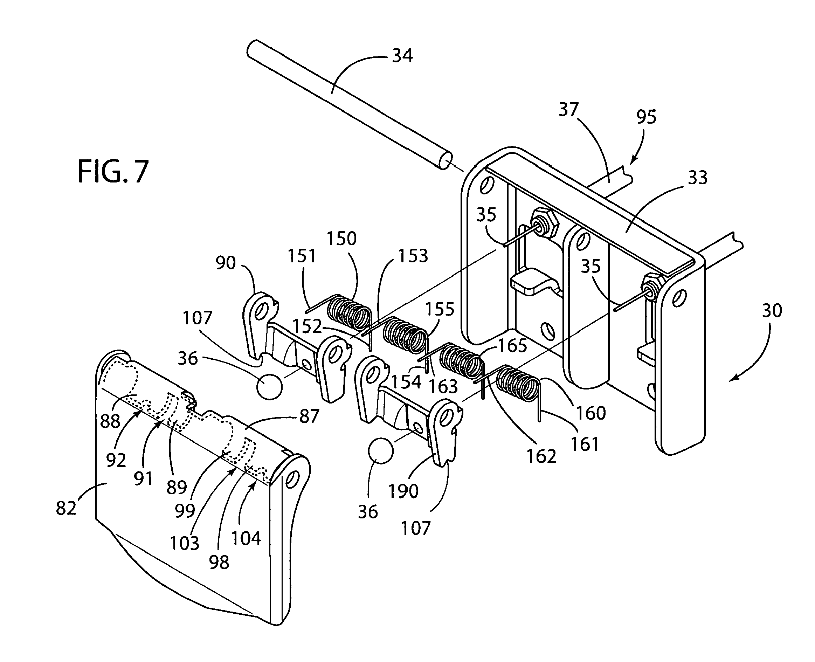

Figs. 7-11 show a preferred embodiment of a release mechanism 30 which accommodates these competing design constraints. The release mechanism comprises a handle 82 and at least one pivot bracket 90. As shown in Fig. 7, two pivot brackets are used, one for each latch member 44, 55. Both the handle 82 and the pivot brackets 90, 190 are pivotally mounted around pivot pin 34 positioned on housing 33 which is in turn affixed to the seat base. In this two cable design the cable assembly 95 comprises two cables 35, each preferably with a cable sheath 37, two pivot brackets 90, two springs 150, 155 and 160, 165 for each pivot bracket. Spring 150 has ends 151 and 152, spring 155 has end 153. In a similar manner, spring 160 has ends 161 and 162, and spring 165 has end 163. Landings 107 on each pivot bracket are adapted to receive a respective corresponding end 151, 161 of spring 150 and 160. Cable end balls 36 operatively connect the cables to the corresponding pivot brackets. There is a curved portion 87 of the handle 82 which wraps around the pivot pin 34. The curved portion 82 of the handle has two teeth 88, 89 with a space 91 between the teeth in the middle. One of the teeth 88 of the curved portion 87 (far left in Fig. 7) has a small visible recess 92. In a similar manner, teeth 98 and 99 are separated by a space 103, and tooth 98 has a small recess 104.

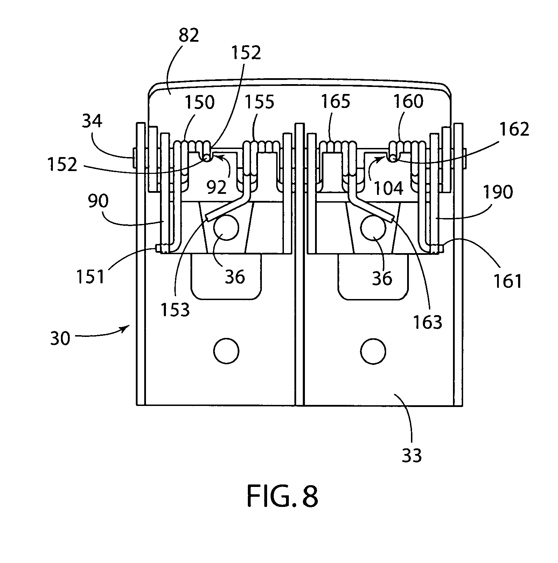

Fig. 8 shows the release mechanism assembled with the handle 82 pivoted up. Each spring 150, 160 and 155, 165 is positioned around the pivot pin 34. Recess 92 receives an end 152 of the spring 150. The other end 151 of spring 150 is positioned on pivot bracket 90. In a similar manner, recess 104 receives an end 162 of the spring 160. The other end 161 of spring 160 is positioned on pivot bracket 190. Spring 155 has spring connection end 153 positioned on the pivot bracket 90 and spring 165 has spring connection end 163 positioned on the pivot bracket 190. The connection ends 153, 163 preferably comprise a fairly lengthy projection from the part of each spring that wraps around the pivot pin. Most preferably the ends sit in a recess in the corresponding pivot bracket. One end 153, 163 of springs 155, 165 continuously biases the pivot brackets back toward a latched position. Springs 155, 165 also provide a different tactile sensation to a seat occupant, making it somewhat more difficult to disengage the seat belts from the seat belt latch members.

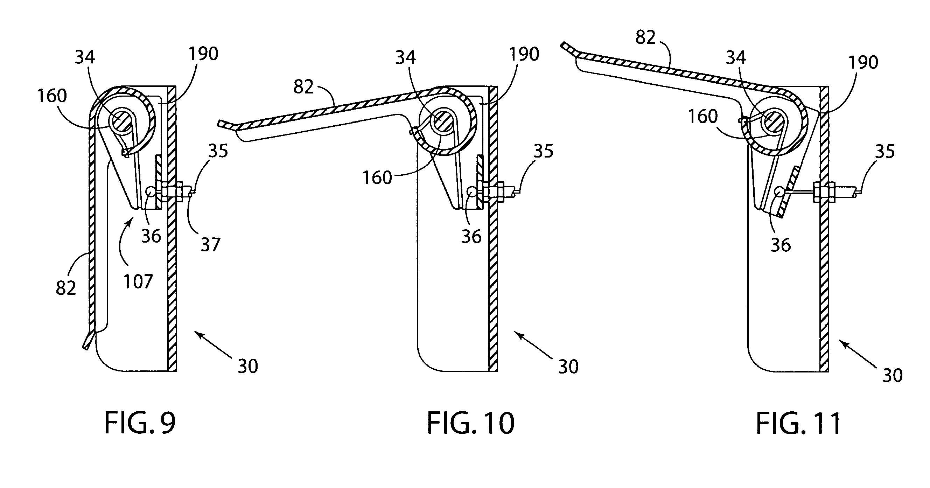

Figs. 9-11 show the operation of the release mechanism 30. The handle 82 moves between a rest position (Fig. 9), an intermediate position about 80° from the rest position (Fig. 10) and an unlatching position about 100° from the rest position (Fig. 11). Pivoting of the handle 82 pulls on the cables which in turn allow the seat belt buckles to be disengaged form the corresponding seat belt latches. Separation of the handle 82 and the pivot brackets 90 advantageously allows for significant pivot of the handle prior to applying tension on the cables. This is a highly advantageous feature which helps to prevent inadvertent release of the seat belt assemblies due to unintentional contact with the handle.

Pivoting of the handle 82 to the intermediate position causes the curved portion of the handle to engage the springs 150, 160. At 80° all of the slack in the spring around the pivot pin 34 is taken up, but the pivot brackets 90, 190 has not yet pivoted. So at rest and at 80°, the pivot brackets 90, 190 are in the same position with respect to the pivot pin, but the handle has moved.

Additional movement of the handle from the intermediate position to the unlatching position begins to move the pivot brackets. This is accomplished by springs 150, 160, which urge the pivot brackets 90, 190 to rotate about the pivot pin. Cable end balls 36 are captivated by the pivot brackets, and move with the corresponding pivot bracket. This in turn pulls the cables, allowing for unlatching of the seat belts from their corresponding latch members. For movement of the handle between 80-100° with respect to the rest position, the handle has pivoted about 20°, and so do the pivot brackets. Pivot brackets move between an unlatching position (Fig. 11) and a latching position (Figs. 9-10). In accordance with a highly advantageous feature, the individual seat belts may still be released from the corresponding latch members 44, 54 even if the single point release mechanism fails. Push buttons readily apparent to those skilled in the art may be provided to disengage each latch independent of cable assembly 95 actuation.

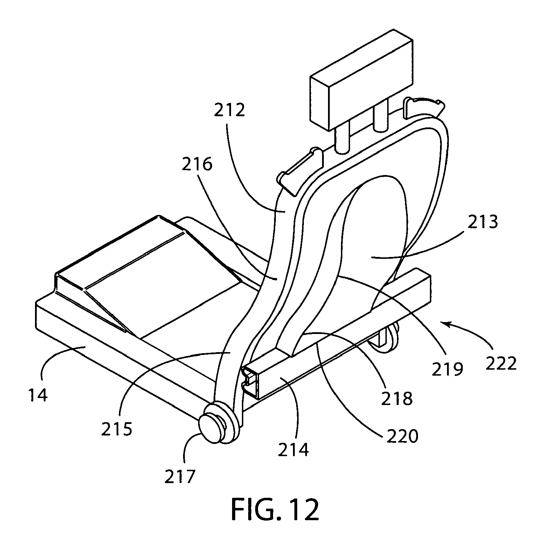

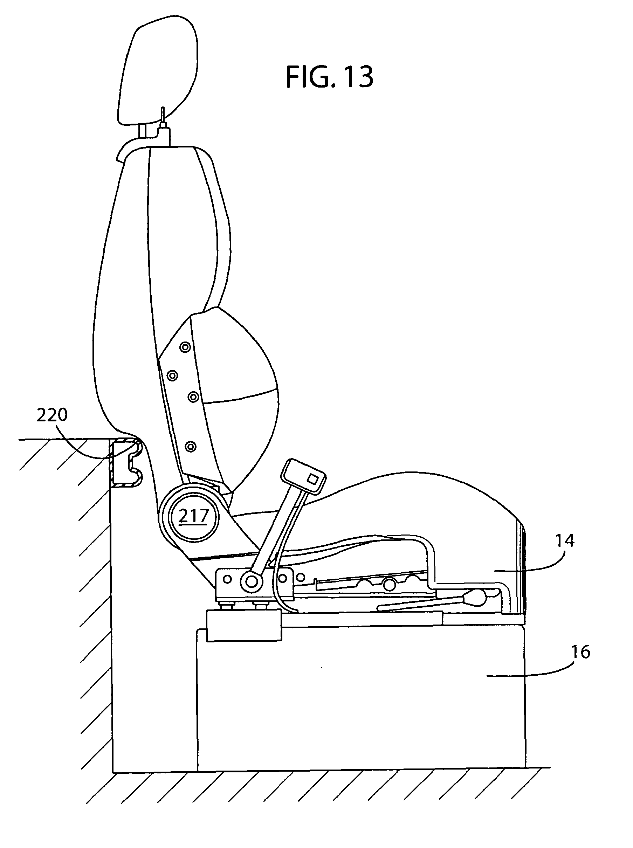

Fig. 12-13 show another preferred embodiment of a seat assembly design to accommodate irregular geometry with the seat base adjusted to a full rearward position immediately adjacent a B-beam 214. In some vehicles a B-beam 214 may intrude into a vehicle compartment, limiting the dimensions of the seat. In accordance with a highly advantageous feature, the seat assembly 210 may be modified to accommodate such a B-beam. B-beam 214 is affixed to the vehicle and serves as a structural member positioned on the back side 22 of the seat assembly. The seat back 212 has a portion 213 defining a pocket extending away from the seat base 14 and towards the back side 222. As discussed above, the pocket accommodates either a removable centre panel or a backpack (for example for carrying drinking water or other liquid) and would sit above the B beam to increase rearward adjustment. The portion 213 defining the pocket has a bottom 220 which ends abruptly at the B-beam 214. The rest of the seat back 212 above seat pivot 217 is formed as a generally curvo-planar member having at least two curves 215, 216. First curve 215 is radiused generally away from the seat base 14 and toward the back side 222 of the seat back to define a recess which can accommodate the B-beam. The bottom 220 of the portion 213 defining the pocket cooperates with the first curve to further define the recess. Above the first curve 215 is the second curve 216 which is radiused generally towards the seat base 14. The portion 213 of the seat back 212 defining the pocket may also have corresponding first and second radiused segments 218, 219 corresponding to and radiused in generally the same direction as curves 215 and 216, respectively. None of the radiused curves need be continuous along a single radius. Preferably the first curve 215 connects to the second curve 216 at a height along the seat back 212, and the first radiused segment 218 connects to the second radiused segment 219 at the same height. The backrest curves are so designed so as to clear the B-Beam or other obstacles, thereby allowing the seat assembly to adjust further backwards. Any recesses in the backrest assembly, such as a backrest pocket which can accommodate a backpack would preferably be positioned above the B-beam so as to allow maximum backward adjustment.

As shown in the Figs., the seat back advantageously follows the shape of the body of an occupant and thereby provides uniform support for the seated occupant. Such a seat back also allows the seat to be adjusted further backwards before striking the B beam than would otherwise be the case. This additional backward motion provides the seated occupant with more leg room, greater comfort and additional safety of moving his head back from potential hazards in the vehicle.

Instead of using just three independent seat belts, each with its own retractor, four or five seat belts may be used. A so-called "5 point" harness system may have five independent seat belts (two shoulder belts, two lap belts, and a central crotch strap). Preferably at least four of the seat belts have retractors. The fifth belt, the central crotch strap (also called "anti-submarine"), may merely be attached to the seat base or to the seat stand.

## Claims

1. A seat assembly comprising, in combination:
a seat back and a seat base, in which the seat back has a front side and a back and has a portion which defines a pocket on the front side;
a removable centre panel positioned in the centre pocket; and
a fastening assembly releasably securing the centre panel to the front side and releasably securing the centre panel to the back.

2. The seat assembly of claim 1 in which the fastening assembly comprises a strip of one part of a hook and loop fastener on one of the seat back and the centre panel, and at least one corresponding receiving area on the other of the seat back and the centre panel to cooperate with the said part of the hook and loop fastener to secure the centre panel to the front side of the seat back.

3. The seat assembly of claim 1 in which the fastening assembly further comprises a plurality of straps connecting the seat back to the centre panel and releasably securing the centre panel to the back of the seat back.

4. The seat assembly of claim 1 which includes a pair of mounting plates mounted on the seat back, with a corresponding side bolster removably mounted to each mounting plate, in which the side bolsters are adapted to protect the kidney area of a seat occupant.

5. The seat assembly of claim 4 which includes a side arm removably mounted on each mounting plate.

6. The seat assembly of claim 1 in which the seat back is mounted on the seat base, and the seat back is formed as a generally curvo-planar member having a first curve radiused generally away from the seat base and defining a recess adapted to accommodate a B-beam of a vehicle, and a second curve radiused generally toward the seat base, in which the first curve is connected to the seat base and the second curve extends from the first curve.

7. The seat assembly of claim 1 in which the portion defining a pocket extends away from the seat base and has a bottom which cooperates with the first curve to define the recess adapted to receive the B-beam.

8. The seat assembly of claim 7 in which the portion defining the pocket comprises first and second radiused segments corresponding to and radiused in generally the same direction as the first and second curves, respectively.

9. The seat assembly of claim 8 in which the first curve connects to the second curve at a height along the seat back, and the first radiused segment connects to the second radiuses segment at the same height.

10. The seat assembly of claim 1 which includes a pair of mounting plates mounted on the seat back, with a corresponding side bolster removably mounted to each mounting plate, in which the side bolsters are adapted to protect the kidney area of a seat occupant.

11. The seat assembly of claim 10 in which the side bolsters provide lateral support to the seat occupant.

12. The seat assembly of claim 10 in which the side bolsters comprise cushioning projections which extend generally away from the seat back.
